# EUROPEAN PATENT APPLICATION

(11) **EP 1 873 856 A1**
(43) Date of publication of application: **02.01.2008**
(21) Application number: 06729961.0
(22) Date of filing: 24.03.2006
(51) Int. Cl.: H01M 8/04, H01M 8/10

(54) **LIQUID FILLING DEVICE FOR FUEL CELL, FUEL CELL, AND FUEL CARTRIDGE**

(30) Priority: 31.03.2005 JP 2005103906
(71) Applicant: KABUSHIKI KAISHA TOSHIBA, Tokyo 105-8001 (JP)
(72) Inventor: KAWAMURA, Koichi, Toshiba Corporation,, Minato-ku, Tokyo 105-8001, (JP); TAKAHASHI, Kenichi, Toshiba Corporation,, Minato-ku, Tokyo 105-8001, (JP); YASUI, Hideaki, Toshiba Corporation,, Minato-ku, Tokyo 105-8001, (JP); HASEBE, Hiroyuki, Toshiba Corporation,, Minato-ku, Tokyo 105-8001, (JP)
(74) Representative: Henkel, Feiler & Hänzel
(86) International application number: PCT/JP2006/306013
(87) International publication number: WO 2006/109536

(57) **Abstract**

The valve of the fuel cartridge nozzle is constituted by a valve body 8, a valve seat 4a, a first compression spring 10 urging the valve body to move toward the valve seat, a seal ring 11 interposed between the valve body urged by the first compression spring and the valve seat, a valve stem 8b disposed inside flow channel which is communicated with the liquid delivery port, and an inside plug 7 supporting the first compression spring, and the valve of the inlet member of fuel cell is constituted by a valve body 26, a valve seat 22a, a second compression spring 27 urging the valve body to move toward the valve seat, a seal ring 28 interposed between the valve body urged by the second compression spring and the valve seat, a valve stem 26b disposed inside flow channel which is communicated with the liquid-receiving port, and a lower member 23 supporting the second compression spring.

## Description

### Technical Field

This invention relates to a liquid injector for safely injecting a liquid fuel such as high-concentration methanol from a fuel cartridge into a small fuel cell to be employed as a built-in power source for mobile instruments such as a cellular phone, a laptop computer, a portable game machine, etc. This invention also relates to a fuel cell and a fuel cartridge, and, in particular, to a spring structure of a valve to be employed in a coupler valve of the liquid injector.

### Background Art

A solid electrolyte type fuel cell is now attracting many attentions as being useful as a power source for a cellular phone and, therefore, the development thereof for the practical use is now being undertaken at a high pitch. The concept of the development is directed to a fuel cell which is small and planar in configuration and from which high output can be derived with small fuel consumption. In order to make it possible to take out high output from the fuel cell, it is required to use a fuel which is high in power-generating efficiency. In this connection, high-concentration methanol is now taken notice of as a most prospective candidate. For example, a fuel cell using high-concentration methanol as a fuel is proposed in JA Patent No. 3413111.

If high-concentration methanol is to be employed as a fuel, the system of fuel cell should be not of an open type but of a closed type equipped with various kinds of supplementary mechanisms such as a fuel pump, an air supply pump, a fuel concentration sensor, etc. so that the fuel is enabled to be consumed only within the cell. Because, since the high-concentration methanol is low in boiling point, it can be readily volatilized and scattered, raising possibilities that men may inhale the volatilized methanol, so that the high-concentration methanol should not be leaked to external atmosphere in viewpoints of safety and hygiene.

When the fuel tank in the fuel cell becomes empty during the use thereof, the fuel tank is required to be replenished with liquid fuel from the cartridge, necessitating the operation to open the liquid delivery port of the cartridge or the inlet member of cell body. As a result, the system is permitted to open, though it may be temporarily, thereby allowing the high-concentration methanol to leak to the external atmosphere. As described above, in viewpoints of safety and hygiene, the high-concentration methanol is absolutely prohibited from being leaked to external atmosphere even on the occasion of replenishing the fuel tank with fuel. Since the replenishment of the fuel tank with fuel is usually performed by a user, it is demanded that the replenishment of the fuel tank with fuel can be performed safely and reliably by everyone without generating the leakage of fuel.

Meanwhile, although a liquid injection coupler is usually equipped with a compression coil spring for opening or closing the valve, there is a problem that, in the case of the valve mechanism to be employed in a fuel cell, when a metal spring is contacted with high-concentration methanol, the cation of metal element such as iron, chromium, nickel, etc. is caused to elute from the metal spring and then permitted to enter into a portion where the cell reaction takes place, thereby possibly inviting the deterioration of characteristics of cell. Since the intrusion of eluted metallic cation as described above would give enormously adverse influences to the characteristics of cell even if the quantity thereof is very small, the elution of metallic cation from the wet part (the part to be contacted with liquid fuel) should be prevented by all means.

### Disclosure of Invention

The present invention has been accomplished with a view to overcoming the aforementioned problems and, therefore, an object of the present invention is to provide a liquid injector which makes it possible to safely inject a liquid fuel such as high-concentration methanol into a fuel cell through simple manipulation without inviting the deterioration in characteristics of cell that may result from the contamination with metallic cation. Further objects of the present invention are to provide a fuel cell and a fuel cartridge to be used in connection with the aforementioned liquid injector.

According to the present invention, there is provided a liquid injector for fuel cell which is designed such that a nozzle (6) of a fuel cartridge is inserted into an inlet member (20) of fuel cell and then the nozzle is further pushed into the inlet member (20) to open not only the valve (8) of the nozzle but also the valve (26) of the inlet member to thereby permit fuel liquid to be injected through the nozzle and the inlet member into the fuel cell from a container (2) of the fuel cartridge; which is characterized in that
the valve (8) of the nozzle of the fuel cartridge is constituted by a liquid inflow port (6c) which is communicated with a container of the fuel cartridge, a liquid delivery port (6a) which opens to a distal end of the nozzle, a valve body (8f) which is disposed in close proximity to the liquid inflow port, a valve seat (4a) formed to surround the liquid inflow port, a first compression spring (10) urging the valve body to move toward the valve seat, a seal ring (11) interposed between the valve body urged by the first compression spring and the valve seat, a valve stem (8b) extended from the valve body toward the nozzle and disposed inside flow channel which is communicated with the liquid delivery port, and an inside plug (7) supporting the first compression spring and defining a valve chamber space (9) surrounding the valve body; and the valve (26) of the inlet member of fuel cell is constituted by a liquid-receiving port (20a) for receiving liquid from the nozzle (6) of fuel cartridge, a valve body (20f) disposed in close proximity to the liquid-receiving port, a valve seat (22a) formed on a circumferential wall of the flow channel of the inlet member, a second compression spring (27) urging the valve body to move toward the valve seat, a seal ring (28) interposed between the valve body urged by the second compression spring and the valve seat, a valve stem (26b) extended from the valve body toward the liquid-receiving port of the inlet member and disposed inside flow channel which is communicated with the liquid-receiving port, and a lower member (23) supporting the second compression spring and defining the valve chamber space (29) surrounding the valve body.

According to the present invention, there is also provided a fuel cell having an inlet member into which a nozzle of fuel cartridge can be inserted, wherein the inlet member is constituted by: a liquid-receiving port for receiving liquid from the nozzle of fuel cartridge, a valve body disposed in close proximity to the liquid-receiving port, a valve seat formed to surround flow channel which is communicated with the liquid-receiving port, a second compression spring urging the valve body to move toward the valve seat, a seal ring interposed between the valve body urged by the second compression spring and the valve seat, a valve stem extended from the valve body toward the liquid-receiving port of the inlet member and disposed inside flow channel which is communicated with the liquid-receiving port, and a lower member supporting the second compression spring and defining the valve chamber space surrounding the valve body.

According to the present invention, there is also provided a fuel cartridge having a nozzle which is designed to be inserted into an inlet member of a fuel cell for replenishing the fuel cell with liquid fuel, wherein the nozzle is constituted by: a liquid inflow port which is communicated with a container of the fuel cartridge, a liquid delivery port which is communicated with the liquid inflow port and opens to a distal end of the nozzle, a valve body which is disposed in close proximity to the liquid inflow port, a valve seat formed to surround flow channel which is communicated with the liquid inflow port, a first compression spring urging the valve body to move toward the valve seat, a seal ring interposed between the valve body urged by the first compression spring and the valve seat, a valve stem extended from the valve body toward the nozzle and disposed inside flow channel which is communicated with the liquid delivery port, and an inside plug supporting the first compression spring and defining a valve chamber space surrounding the valve body.

The first and second compression springs may be formed of a corrosion resistant material such as stainless steel wire for spring as specified by JIS G 4314 (for example, SUS304-WPB), a stainless steel band for spring as specified by JIS G 4313 (for example, SUS631J1-WPC), beryllium bronze as specified by JIS G 3130 (for example, C1720W), phosphor bronze (for example, C5191W), titanium wire, etc. It is also possible to employ, other than these corrosion resistant metallic materials, other kinds of corrosion resistant metallic materials such as hard steel wire for spring, piano wire, brass, beryllium copper alloy, titanium copper alloy, 17·7PH stainless steel, etc.

The first and second compression springs may be formed of a surface-treated metallic material. As for the surface treatment layer, it is possible to employ noble metal plating such as gold (Au) plating, platinum (Pt) plating, rhodium plating, etc.; or titanium plating which is capable of forming a thin oxide film on the surface of metal substrate. Alternatively, it is also possible to employ, as a non-metallic coating layer, carbon (for example, diamond-like carbon coating (DLCC)) or resin coating such as fluorine, etc. If any portion which is designed to be contacted with high-concentration methanol is formed of base metals such as iron, chromium, nickel, copper, etc., the characteristics of cell are more likely to be deteriorated due to the contamination with cation that has been eluted into the high-concentration methanol. Therefore, the wet part is required to be constructed such that the base metal constituting the wet part is prevented from being exposed to high-concentration methanol.

Further, the first and second compression springs may be formed of a non-metallic material. Namely, a compression coil spring may be manufactured by making use of a non-metallic material such as carbon or resin which is excellent in methanol resistance (chemical resistance) such as polyethylene terephthalate (PET), polypropylene (PP), polycarbonate (PC), etc.

The spring modulus ε1 of the first compression spring may be made equivalent to or larger than the spring modulus ε2 of the second compression spring, thereby enabling the valve of the inlet member of fuel cell to open concurrent with or earlier than the opening action of the valve of the cartridge nozzle. Alternatively, the spring modulus ε2 of the second compression spring may be made larger than the spring modulus ε1 of the first compression spring, thereby enabling the valve of the cartridge nozzle to open earlier than the opening action of the valve of the inlet member of fuel cell. Although it is possible to achieve liquid leakage-preventing effects irrespective of the order of switching timing of these valves, it is preferable, in order to more reliably achieve the liquid leakage-preventing effects, to select the spring modulus of these valve-urging compression springs so as to have the first mentioned relationship of: ε1>ε2 or ε1=ε2, thereby enabling the valve 26 of the fuel cell body to open earlier than or concurrent with the opening action of the valve of the cartridge nozzle. Because, if the valve 26 of the fuel cell body is already brought into an opened state at the time when liquid fuel is to be delivered from the cartridge nozzle 6, the liquid fuel can be smoothly and rapidly introduced into the tank of cell body.

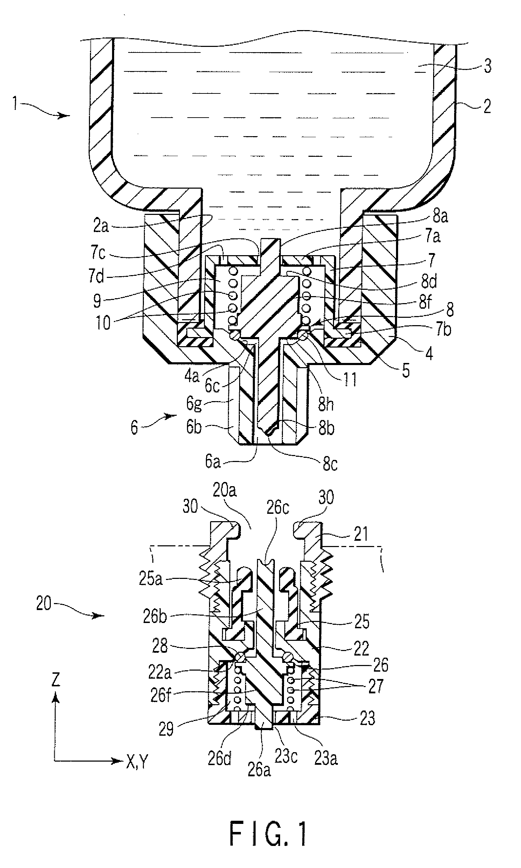

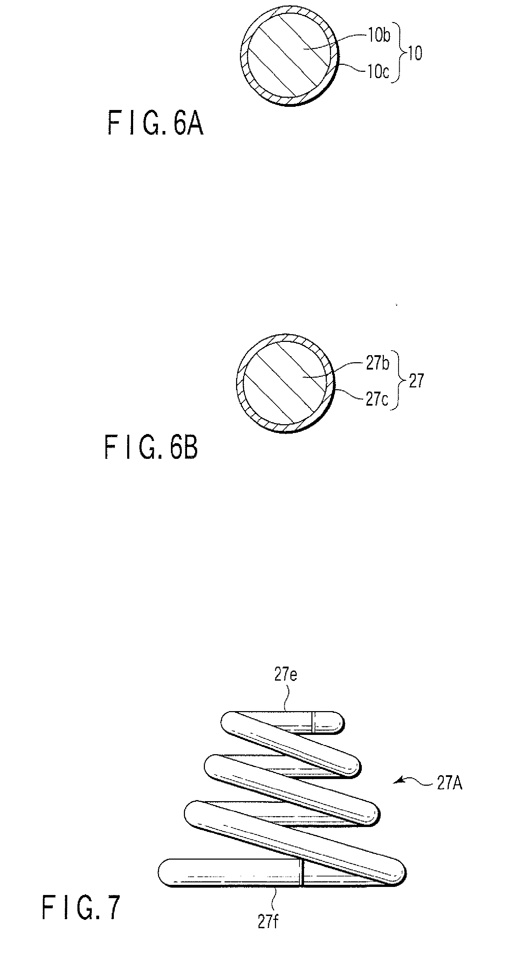

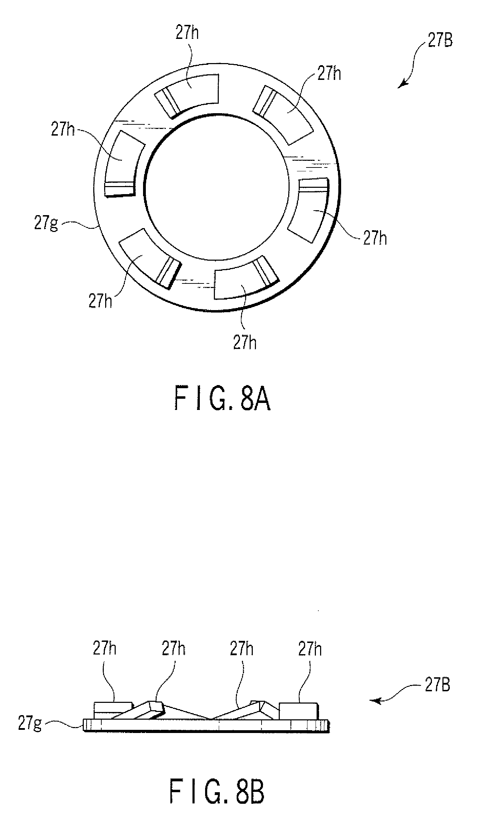

The first and second compression springs may be of any configuration selected from cylindrical coil springs (FIGS. 1-5), a trapezoidal coil spring (FIG. 7) and a leaf spring (FIG. 8). The cylindrical coil spring is advantageous in that, since the configuration thereof is relatively simple, it can be easily manufactured and that the spring modulus thereof can be easily adjusted. On the other hand, the trapezoidal coil spring is advantageous in that, when it is compressed to a maximum extent, the overriding of coils can be avoided, thereby making it possible to reduce the minimum thickness (the size in axial direction) of the spring to the diameter of spring wire. In the case of mobile instruments such as a cellar phone, there is a strong demand to miniaturize the fuel cell as small as possible. It is possible, by making use of this trapezoidal coil spring, to minimize the volume to be occupied by the spring in the valve chamber at the time when the spring is fully compressed. As a result, it is possible, by making use of this trapezoidal coil spring, to secure an increased displacement stroke of valve and, at the same time, to reduce the valve chamber as small as possible. The leaf spring is also advantageous in these respects as explained above.

### Brief Description of Drawings

FIG. 1 is a cross-sectional view showing the interior of the liquid injector of fuel cell according to the present invention;
FIG. 2 is a longitudinal sectional view showing the interior of the liquid injector of fuel cell at a first stage wherein the nozzle of cartridge is inserted into the inlet member of fuel cell;
FIG. 3 is a longitudinal sectional view showing the interior of the liquid injector of fuel cell at a second stage wherein the nozzle of cartridge is pushed into the inlet member of fuel cell;
FIG. 4 is a longitudinal sectional view showing the interior of the liquid injector of fuel cell at a third stage wherein the nozzle of cartridge is further pushed into the inlet member of fuel cell;
FIG. 5 is a longitudinal sectional view showing the interior of the liquid injector of fuel cell at a fourth stage wherein the nozzle of cartridge is still further pushed into the inlet member of fuel cell;
FIG. 6A is a cross-sectional view of the compression spring for use in the valve of cartridge;
FIG. 6B is a cross-sectional view of the compression spring for use in the valve of cell body;
FIG. 7 is a side view of the compression spring (trapezoidal coil spring) for use in a valve according to another embodiment;
FIG. 8A is a plan view of the compression spring (leaf spring) for use in a valve according to another embodiment; and
FIG. 8B is a side view of the compression spring (leaf spring) of FIG. 8A.

### Best Mode for Carrying Out the Invention

Next, the best mode for carrying out the present invention will be explained with reference to drawings attached herewith.

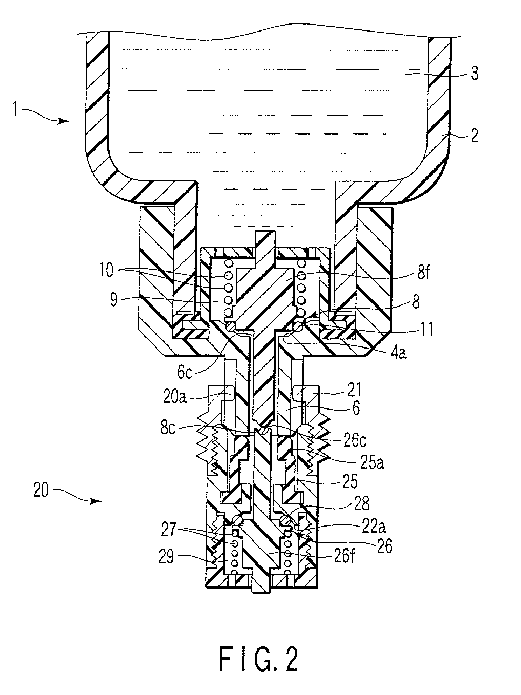

The liquid injector for fuel cell according to the present invention is constituted by a combination of a cartridge 1 and the inlet member 20 of fuel cell body as shown in FIG. 1. As shown in FIGS. 2-5, a cartridge nozzle 6 functioning as a coupler of cartridge is designed to be inserted into the liquid-receiving port 20a of inlet member functioning as a coupler of cell body, thereby supplying the tank (not shown) of the fuel cell body with high-concentration methanol employed as liquid fuel.

The cartridge 1 is constituted by a container 2 defining a liquid storage space 3 filled with high-concentration methanol to be employed as a liquid fuel, a cartridge base 4 attached to the container 2 so as to surround an opening 2a formed on one end of the container 2, and a cartridge nozzle 6 attached to the opening 2a of the container 2. As for the configuration of container 2, it may be selected from various configurations such as cylindrical, spindle-shaped, flattened tubular or prismatic configuration. The cartridge base 4 and the cartridge nozzle 6 are molded integral with each other, wherein the cartridge nozzle 6 is externally protruded from the cartridge base 4. A space encircled by the integral body consisting of base 4/nozzle 6, the opening 2a of the container 2 and the inside plug 7 is sealed with a rubber packing 5 having a U-shaped cross-section.

The cartridge nozzle 6 is equipped with a nozzle body 6b, a valve 8, the inside plug 7, a compression spring 10 and a seal ring 11. The outer circumference of nozzle body 6b is indented with grooves(keyway) 6g as a bayonet coupler(key and keyway coupling) element. The needle (valve stem) 8b of valve 8 is inserted in the inner channel of nozzle body 6b. The inside plug 7 is disposed so as to surround the valve body 8f and to define a valve chamber 9. The compression spring 10 is disposed so as to urge the valve body 8f to move toward a valve seat 4a. The seal ring 11 is sustained in a sustaining groove 8h of the valve body 8f and press-contacted with the valve seat 4a by the urging force of the compression spring 10. When the seal ring 11 is forcibly pulled away from the valve seat 4a, a liquid inflow port 6c is caused to open, thereby enabling the liquid to flow toward a liquid delivery port 6a.

The inside plug 7 has a hat-like or a cup-like configuration, and the flange 7b thereof is detachably sustained, through a rubber packing 5, in the cartridge base 4. The inside plug 7 is made of a thin resin film (for example, PEEK) having a certain degree of flexibility. On the occasion of assembling the inside plug 7, the valve 8 is incorporated in the inside plug 7 and then the flange 7b of inside plug 7 is fitted in the rubber packing 5 that has been adhered to the cartridge base 4. Thereafter, the cartridge base 4 is adhered to the opening 2a of container and/or attached thereto through caulking or screw engagement.

The valve 8 is equipped with the needle (valve stem) 8b and a guide pin 8a. The fore-end portion (a lower portion in the drawing) of the valve body 8f is provided with sustaining grooves 8h, by means of which the seal ring 11 is sustained. This needle 8b is extended, in a form of needle or rod, from the fore-end of valve body 8f. This needle 8b is inserted in the channel of nozzle 6 so as to act as a valve stem and hence made movable up and down. The length of this needle 8b is almost equivalent to the entire length of the channel of nozzle 6. However, it is preferable that the length of this needle 8b is set to such that when the cartridge 1 is not yet connected with the cell body before the employment thereof, the distal end 8c of needle is slightly retracted from the liquid delivery port 6a. Because, the adjustment of the length of this needle 8b in this manner would be effective in avoiding the damage of the distal end 8c of needle, in preventing any foreign materials such as dust from entering into the channel of nozzle from the liquid delivery port 6a, and in preventing the valve from unintentionally being opened.

The guide pin 8a is protruded toward the container 2 from a rear end portion (an upper side in FIG. 1) of the valve body 8f and extended into liquid storage space 3 through an opening 7c formed at the center of top of the inside plug 7. The top plate 7a of the inside plug is provided with a plurality of through-holes 7c, through which liquid fuel is enabled to enter into the space 9 of valve chamber from the liquid storage space 3.

A stopper 8d is attached to a rear end portion of valve body 8f, thereby regulating the magnitude of rising stroke within which the valve body 8f is enabled to move in the axial direction (Z-direction). Namely, when a force which is sufficiently higher than the urging force of the compression spring 10 is loaded on valve body 8f (the seal ring 11 is pulled away from the valve seat 4a and the liquid inflow port 6c is opened, enabling the space 9 of valve chamber to communicate with the liquid delivery port 6a), the valve body 8f is not permitted to ascend unlimitedly but is prevented from ascending at a point where the stopper 8d is contacted with the upper plate 7a of inside plug.

The compression spring 10 is formed of a cylindrical coil spring made of a metallic material which is plated or coated with a metal or an alloy exhibiting corrosion resistance to high-concentration methanol. The spring modulus ε1 of the compression spring 10 is regulated to a predetermined magnitude. One end of the compression spring 10 is fixed to the inner surface of the top plate 7a of inside plug and the end thereof is fixed to a small flange of the valve body 8f.

The seal ring 11 is formed of an O-ring having a circular cross-section and made of a metallic material which is plated or coated with a metal or an alloy exhibiting corrosion resistance to high-concentration methanol. The seal ring 11 is fitted in the sustaining groove 8h of valve body 8f.

Next, the inlet member 20 of fuel cell body will be explained.

The inlet member 20 is constituted by an upper member 21, an intermediate member 22, a lower member 23, a rubber holder 25, a valve 26, a compression spring 27, a seal ring 28 and a plurality of projections(key) 30 acting as a bayonet coupler(key and keyway coupling) element. The upper member 21, the intermediate member 22 and the lower member 23 are all substantially the same in diameter and coaxially joined together. The upper member 21 is screw-engaged with one end of the intermediate member 22. The lower member 23 is screw-engaged with the other end of the intermediate member 22. An assembly integrally constituted by the upper member 21, the intermediate member 22 and the lower member 23 is screw-engaged with the fuel cell body (not shown) in such a manner that most of the assembly is buried in the fuel cell body. The fuel cell body (not shown) is provided therein with a fuel tank. The space 29 of valve chamber which is defined by the lower member 23 and the intermediate member 22 is communicated, through an opening 23a, with this fuel tank.

The liquid-receiving port 20a of inlet member is opened at an upper end of the upper member 21. This upper member 21 is provided, on the inner wall thereof, with a pair of projections 30 each extending to the center of liquid-receiving port 20a. These projections (key)30 are respectively designed to act as a bayonet coupler(key and keyway coupling) element and configured so as to fit in either one of couple of grooves(keyway) 6g formed on the outer circumferential wall of cartridge. The ring 24 is provided so as to act as a sealing member for blocking a gap to be formed between the nozzle 6 and the inlet member 20.

The rubber holder 25 is annular in configuration and the proximal end portion thereof is designed to be fitted in a recessed portion of the intermediate member 22. The distal end portion 25a of the rubber holder 25 is extended toward the liquid-receiving port 20a. The diameter of distal end portion 25a of the rubber holder is approximately the same as the diameter of cartridge nozzle 6. This rubber holder 25 is made of a synthetic rubber whose hardness is regulated to a desired range. When the nozzle 6 is press-contacted with the distal end portion 25a of the rubber holder, the distal end portion 25a is elastically deformed (compressed), thereby enabling the nozzle 6 to be displaced.

The valve 26 is constituted by a valve body 26f, a guide pin 26a, a needle (valve stem) 26b, a stopper 26d, a compression spring 27, a seal ring 28 and a valve seat 22a. The compression spring 27 is formed of a cylindrical coil spring made of a metallic material which is plated or coated with a metal or an alloy exhibiting corrosion resistance to high-concentration methanol. The spring modulus ε2 of the compression spring 27 is regulated to a predetermined magnitude. Under the condition where the seal ring 28 of valve body 26f that has been urged by the compression spring 27 is press-contacted with the valve seat 22a, the space 29 of valve chamber is cut off from the liquid-receiving port 20a. When the pushing force by the nozzle 6 becomes higher than the urging force of the compression spring 27, the seal ring 28 is moved away from the valve seat 22a, permitting the space 29 of valve chamber to communicate with the liquid-receiving port 20a.

In this case, either the valve 8 of cartridge or the valve 26 of the cell body should be enabled to open earlier than the other, i.e. the order of opening of these valves, can be determined depending on the difference in magnitude of spring modulus of compression springs 10 and 27 employed to urge the valve bodies 8f and 26f. When the spring modulus ε1 of the spring 10 of cartridge is larger than the spring modulus ε2 of the spring 27 of the cell body (ε1>ε2), the valve 26 of the cell body is caused to open earlier than the valve 8 of the cartridge, thus permitting the valve 8 of the cartridge to open subsequently. On the other hand, when the spring modulus ε2 of the spring 27 of the cell body is larger than the spring modulus ε1 of the spring 10 of cartridge (ε1<ε2), the valve 8 of the cartridge is caused to open earlier than the valve 26 of the cell body, thus permitting the valve 26 of the cell body to open subsequently. By the way, when the spring modulus ε1 of the spring 10 is made the same as the spring modulus ε2 of the spring 27 (ε1=ε2), both of these valves 8 and 26 will be opened concurrently.

Irrespective of the order of switching timing of these valves 8 and 26, it is possible to achieve liquid leakage-preventing effects. However, it is preferable, in order to more reliably achieve the liquid leakage-preventing effects, to select the spring modulus ε1 and ε2 of these compression springs 10 and 27 so as to have the first mentioned relationship of: (ε1>ε2) or the equivalent relationship of: ε1=ε2, thereby enabling the valve 26 of the cell body to open earlier than or concurrent with the opening action of the valve 8 of the cartridge. Because, if the valve 26 of the cell body is already brought into an opened state at the time when liquid fuel is to be delivered from the cartridge nozzle 6, the liquid fuel can be smoothly and rapidly introduced into the tank of cell body.

By contrast, when the spring modulus ε1 and ε2 of these compression springs 10 and 27 are selected so as to have the last mentioned relationship of: (ε1<ε2), leakage of liquid may be caused to generate if the opening timing of the valve 26 of cell body is excessively delayed. The reason is that since the inner pressure of cartridge container 2 is made slightly higher than atmospheric pressure (for example, +0.2 kgf/cm² to 0.5 kgf/cm²), the liquid fuel may be caused to leak into external atmosphere before the valve 26 is opened. Because of this, if the latter relationship of: (ε1<ε2) is selected, it should be keep in mind that the spring modulus ε2 of the cell body side spring 27 should not be set excessively higher than the spring modulus ε1 of the cartridge side spring 10.

The needle 26b is employed so as to act as a valve stem and disposed to extend toward the liquid-receiving port 20a from the fore-end (upper side in FIG. 1) of valve body 26f, thereby rendering the needle 26b to be introduced into the channel of the inlet member. A main portion of the needle 26b is surrounded by the rubber holder 25. The distal end 26c of the needle is configured so as to have a recessed portion, which is designed to be fitted with the convex distal end portion 8c of the needle of cartridge nozzle side valve. When these needles 8b and 26b are press-contacted with each other, they may be pushed back in an off-set state if the contacting area of these needles is small. Therefore, in order to prevent the off-set of these needles 8b and 26b, the distal end portion 8c of the needle of cartridge nozzle side is formed into a convex configuration and, at the same time, the distal end 26c of the needle is formed into a concave configuration, thereby ensuring the reliable engagement of these needles.

The guide pin 26a is disposed so as to protrude through the opening 23c of the lower member 23 toward a fuel tank (not shown). A stopper 26d is provided at a rear end portion (lower side in FIG. 1) of the valve body 26f so as to regulate the magnitude of ascending stroke with which the valve body 26f is enabled to move in the axial direction. Namely, when a force higher than the urging force of the compression spring 27 is applied to the valve body 26f, the seal ring 28 is pulled away from the valve seat 22a, permitting the space 29 of valve chamber to communicate with and release to the liquid-receiving port 20a. However, the valve body 26f is not permitted to ascend unlimitedly but is prevented from ascending at a point where the stopper 26d is contacted with the bottom portion of lower member 23.

By the way, the needles 8b, 26 and the guide pins 8a, 26a are respectively provided, on their outer circumferential wall thereof and along the axial direction thereof, with a groove-like recess (not shown), thereby forming channels, between the recess and the inner wall of the nozzle 6, etc., through which liquid fuel is enabled to flow. In the case of the coupler for use in mobile instruments, since the coupler is required to be fabricated as small as possible as a whole, it is difficult to secure the channel of liquid fuel. For this reason, these valve elements 8a, 8b, 26a and 26b are provided respectively with a groove or a recess for creating the channel in addition to the communicating openings 7d and 23a, thereby making up for the shortage of channel.

The container 2, the cartridge base 4, the cartridge nozzle 6, the inside plug 7, the valves 8f and 26f, the intermediate member 22 and the lower member 23 are all made of PEEK. The upper member 21 and the ring 24 are all made of stainless steel (SUS304). The packing 5, the seal rings 11 and 28, and the rubber holder 25 are all made of synthetic rubber whose hardness is suitably adjusted (EPDM 30°-50°).

The compression spring 10 for urging the valve body 8f of cartridge side valve is configured such that the base material 10b thereof is coated all over the surface thereof with a covering layer 10c as shown in FIG. 6A. Likewise, the compression spring 27 for urging the valve body 26f of cell body side valve is configured such that the base material 27b thereof is coated all over the surface thereof with a covering layer 27c as shown in FIG. 6B. These base materials 10b and 27b are both formed of a metallic material, and these covering layers 10c and 27c are both formed of the same material that has been manufactured in substantially the same manner.

In this embodiment, the base materials 10b and 27b are both fabricated into the shape of compression coil spring by making use of stainless steel SUS304-WPB wire rod for spring specified by JIS G 4314 and having a diameter of 4 mm, and then the resultant base materials 10b and 27b are subjected to electrolytic plating to form the coated layers 10c and 27c having a thickness of 3 µm and made of pure gold (purity: 99.99%).

Although austenite-base stainless steel (SUS304-WPB) is employed for forming the base materials 10b and 27b of spring in this embodiment, it is possible to employ other kinds of material which are excellent in corrosion resistance such as stainless steel wire for spring as specified by JIS G 4314 (for example, SUS316-WPA), a stainless steel band for spring as specified by JIS G 4313 (for example, SUS631J1-WPC), beryllium bronze as specified by JIS G 3130 (for example, C1720W), phosphor bronze (for example, C5191W), titanium wire, etc. It is also possible to employ, other than these corrosion resistant metallic materials, other kinds of metallic materials such as hard steel wire for spring, piano wire, brass, beryllium copper alloy, titanium copper alloy, 17·7PH stainless steel, etc.

Further, the base materials 10b and 27b of spring may be formed of a non-metallic material which is excellent in elasticity. For example, the compression coil spring may be manufactured by making use of a non-metallic material such as carbon or resin which is excellent in methanol resistance (chemical resistance) such as polyethylene terephthalate (PET), polypropylene (PP), polycarbonate (PC), etc.

The covering layers 10c and 27c may be formed by making use of noble metal plating such as gold (Au) plating, platinum (Pt) plating, rhodium plating, etc. which is designed to be formed as a surface treatment layer; titanium plating which is capable of forming a hard oxide film; or, as a non-metallic coating layer, carbon (for example, diamond-like carbon coating (DLCC)) or resin coating such as fluorine, etc. If any portion which is designed to be contacted with high-concentration methanol is formed of base metals such as iron, chromium, nickel, copper, etc., the characteristics of cell are more likely to be deteriorated due to the contamination with cation that has been eluted into the high-concentration methanol. Therefore, the wet part is required to be constructed such that the base metal constituting the wet part is prevented from being exposed to high-concentration methanol. Therefore, the spring to be used in the valve is required to be surface-treated. By the way, since all of the members to be contacted with methanol except the spring are made of resin or rubber, it is possible to prevent the possibilities that the methanol is contaminated with metallic cation.

Next, the operation to be conducted on the occasion of injecting liquid fuel to the cell body from the cartridge will be explained with reference to FIGS. 2-5.

The cartridge nozzle 6 is inserted into the liquid-receiving port 20a of inlet member and then the projections 30 of the inlet member are fitted in the grooves 6g of cartridge nozzle. Thereafter, the nozzle 6 is linearly moved in the axial direction and then again moved in circumferential direction. At this moment, the distal end of nozzle 6 is press-contacted with the distal end portion 25a of rubber holder as shown in FIG. 2 (when the nozzle is inserted to a distance of 2.7 mm, the distal end of nozzle 6 is press-contacted with the distal end portion 25a).

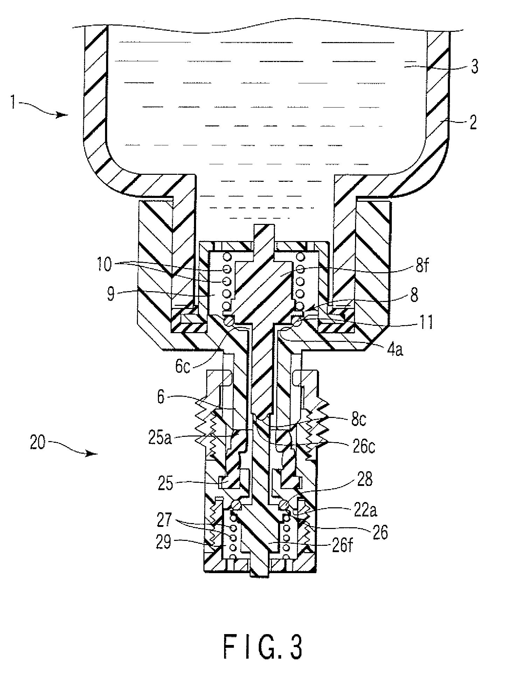

Then, when the nozzle 6 is further pushed in the axial direction as well as in circumferential direction, the distal end portion 25a of rubber holder is elastically deformed (compressed) as shown in FIG. 3, thereby enabling the distal end 8c of needle of cartridge side valve to contact with the distal end 26c of needle of inlet member side valve (when the rubber holder is compressed to a distance of 0.5 mm, the distal ends 8c and 26c of needles of valves are press-contacted with each other).

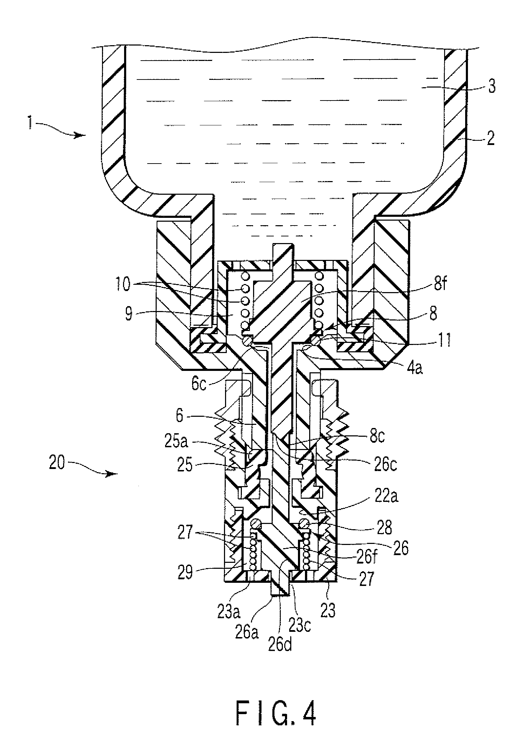

Further, when the nozzle 6 is further pushed in the axial direction as well as in circumferential direction, the rubber holder 25 is further compressed and, at the same time, the valve body 26f is entirely pushed downward resisting against the urging force of the compression spring 27, thereby enabling the seal ring 28 to move away from the valve seat 22a. As the nozzle 6 is pushed down to the lower dead center where the stopper 26d is caused to contact with the bottom plate of lower member 23 of inlet member, the valve 26 of the cell body is caused to fully open (when the rubber holder is compressed to a distance of 1.0 mm, the valve 26 of cell body is fully opened) as shown in FIG. 4.

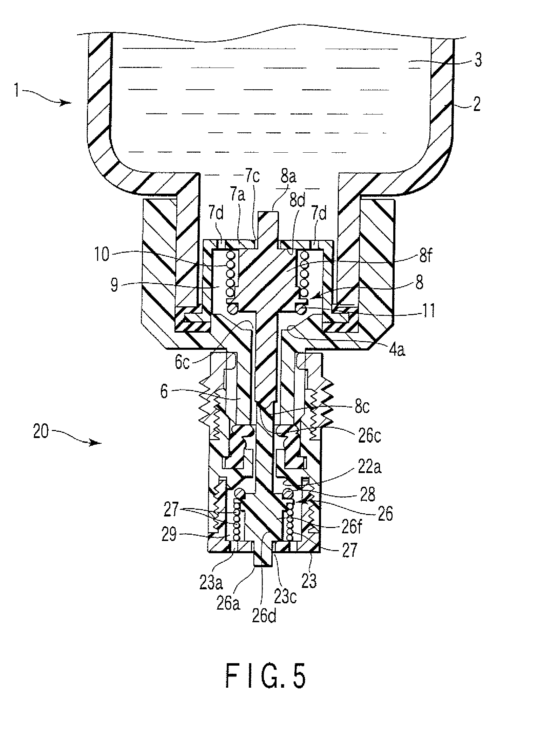

When the nozzle 6 is furthermore pushed in the axial direction as well as in circumferential direction, the valve body 8f is entirely pushed upward resisting against the urging force of the compression spring 10, thereby enabling the seal ring 11 to move away from the valve seat 4a. As the nozzle 6 is pushed down to the upper dead center where the stopper 8d is caused to contact with the top plate 7a of inside plug, the valve 8 of the cartridge is caused to fully open (when the rubber holder is compressed to a distance of 1.5 mm, the valve 8 of cartridge is fully opened) as shown in FIG. 5.

Due to the pushing of the cartridge nozzle 6 in this manner, the rubber holder 25 of cell body is caused to elastically deform, thereby enabling both of the valves 8 and 26 to open and hence making it possible to inject liquid fuel into the cell body from the cartridge without inviting the leakage of liquid. By the way, either the valve 8 or the valve 26 should be enabled to open earlier than the other, i.e. the order of opening of these valves, can be determined depending on the difference in magnitude of spring modulus of compression springs 10 and 27 employed to urge the valves 8f and 26f. When the spring modulus ε1 of the spring 10 of cartridge is larger than the spring modulus ε2 of the spring 27 of the cell body (ε1>ε2), the valve 26 of the cell body is caused to open earlier than the valve 8 of the cartridge, thus permitting the valve 8 of the cartridge to open subsequently. On the other hand, when the spring modulus ε2 of the spring 27 of the cell body is larger than the spring modulus ε1 of the spring 10 of cartridge (ε1<ε2), the valve 8 of the cartridge is caused to open earlier than the valve 26 of the cell body, thus permitting the valve 26 of the cell body to open subsequently.

In the case of the apparatus of this embodiment, since the spring for driving the valve to open or close is surface-treated (the plating of noble metal) or covered with a non-metallic covering layer (resin coating) so as to prevent the base metal of the wet part from being exposed to liquid fuel, it is possible to prevent the deterioration of performance of cell that may be caused to occur due to the contamination liquid fuel with cation.

Next, other embodiments of the compression spring for valve will be explained with reference to FIGS. 7, 8A and 8B.

In the foregoing embodiment, a cylindrical coil spring is employed as a compression spring for valve. However, the compression spring to be used in the present invention is not limited to such a coil spring. Namely, various kinds of springs differing in configuration can be employed other than the cylindrical coil spring. For example, a trapezoidal coil spring 27A as shown in FIG. 7 can be employed as the valve 26 of the cell body. This trapezoidal coil spring 27A is configured such that it is provided, on one end thereof, with a small diametral portion 27e and, on the other end thereof, with a large diametral portion 27f and that the diameter thereof is increased or decreased every coil pitch by a magnitude of the diameter of wire, thereby forming a tapered spiral configuration. This trapezoidal coil spring 27A is designed such that, when it is compressed to a maximum extent, the overriding of coils can be avoided, thereby making it possible to reduce the minimum thickness (the size in axial direction) of the spring to nearly the diameter of spring wire. In the case of mobile instruments such as a cellar phone, there is a strong demand to miniaturize the fuel cell as small as possible. It is possible, by making use of this trapezoidal coil spring 27A, to minimize the volume to be occupied by the spring in the valve chamber at the time when the spring is fully compressed. As a result, it is possible, by making use of this trapezoidal coil spring, to secure an increased displacement stroke of valve and, at the same time, to reduce the valve chamber as small as possible.

The leaf spring 27B as shown in FIGS. 8A and 8B can be employed as the valve 26 of the cell body. This leaf spring 27B comprises a ring-shaped substrate 27g provided with six raised portions 27h, each of which is formed by cutting and raising part of the substrate 27g. These six raised portions 27h are disposed at equal pitch intervals around the central axis of the spring as shown in FIG. 8A. When these raised portions 27h are pressed downward from above, they are elastically displaced and sunk into the substrate 27g, thereby enabling it to become substantially flush with the substrate 27g. As a result, the thickness of the entire body of leaf spring 27B becomes almost the same as the thickness of the substrate 27g. When the load is removed from the leaf spring 27B, the raised portions 27h are elastically displaced, enabling the raised portions 27h to restore the original configuration. It is also possible, by making use of this leaf spring 27B, to obtain almost the same effects as obtained in the aforementioned trapezoidal coil spring 27A.

In the foregoing description, although there have been explained about the examples where a trapezoidal coil spring or a leaf spring is employed in the valve 26 of the cell body, these trapezoidal coil spring and leaf spring can be, of course, used in the valve of cartridge. Further, these trapezoidal coil spring 27A and leaf spring 27B may be, of course, covered with a corrosion resistant covering layer 27c as shown in FIG. 6B.

By the way, in the aforementioned embodiment, although there has been explained about a liquid injection system for injecting liquid fuel such as methanol into the tank of fuel cell from a cartridge, the present invention is not limited to such an embodiment. Namely, the present invention can be applied to a water injection system for feeding water to the solid electrolyte film of fuel cell from the cartridge. By injecting an appropriate quantity of water by making use of this water injection system, it is possible to humidify the solid electrolyte film of fuel cell even if the fuel cell is left in an un-used condition after the suspension of power generating operation, thus making it possible to easily re-actuate the fuel cell. By the way, after the actuation of power generating operation, the generation of water is caused to occur due to the power-generating reaction and the power generating operation is continued by the supply of high-concentration fuel, so that the quantity of water to be prepared in the cartridge can be reduced as compared with the quantity of liquid fuel.

Further, although a liquid injection system for feeding only liquid fuel has been explained in the foregoing embodiment, the present invention is not limited to such a system, but can be applied to a liquid injection system wherein not only liquid fuel but also water can be injected. Namely, in that case, the interior of the cartridge container is partitioned into two chambers and one of the chambers is used for accommodating liquid fuel and the other is used for accommodating water, whereby the liquid fuel and water can be separately fed to the fuel cell body through nozzles separately attached to the cartridge body. In this case however, a couple of inlet members, for the liquid fuel and for water, should be also installed in the fuel cell body.

Further, although the employment of methanol fuel has been explained as one example of liquid fuel in the foregoing description, the liquid fuel is not limited to methanol but may be selected from various kinds of liquid fuel such as ethanol fuel such as an aqueous solution of ethanol, pure ethanol, etc.; propanol fuel such as an aqueous solution of propanol, pure propanol, etc.; glycol fuel such as an aqueous solution of glycol, pure glycol, etc.; dimethyl ether; formic acid, etc. These liquid fuels can be optionally employed depending on the features of fuel cell. In that case, the objects of the present invention will be achieved by optionally selecting materials in conformity with the liquid fuel selected.

The present invention can be utilized in safely injecting a liquid fuel such as high-concentration methanol into a small fuel cell to be employed as a built-in power source for mobile instruments such as a cellular phone, a mobile audio-instrument, a laptop computer, a portable game machine, etc.

According to the present invention, it is possible to safely inject high-concentration methanol into a fuel cell through simple manipulation without generating leakage of liquid fuel and also without inviting the deterioration in characteristics of cell that may result from the contamination with metallic cation.

## Claims

1. A liquid injector for fuel cell which is designed such that a nozzle of a fuel cartridge is inserted into an inlet member of fuel cell and then the nozzle is further pushed into the inlet member to open not only a valve of the nozzle but also a valve of the inlet member to thereby permit fuel liquid to be injected through the nozzle and the inlet member into the fuel cell from a container of the fuel cartridge; which is **characterized in that**
the valve of the nozzle of the fuel cartridge is constituted by:
a liquid inflow port which is communicated with a container of the fuel cartridge,
a liquid delivery port which opens to a distal end of the nozzle,
a valve body which is disposed in close proximity to the liquid inflow port,
a valve seat formed on a circumferential wall of the liquid inflow port,
a first compression spring urging the valve body to move toward the valve seat,
a seal ring interposed between the valve body urged by the first compression spring and the valve seat,
a valve stem extended from the valve body toward the nozzle and disposed inside flow channel which is communicated with the liquid delivery port, and
an inside plug supporting the first compression spring and defining a valve chamber space surrounding the valve body; and
the valve of the inlet member of fuel cell is constituted by:
a liquid-receiving port for receiving liquid from the nozzle of fuel cartridge,
a valve body disposed near the liquid-receiving port,
a valve seat formed to surround the flow channel of the inlet member,
a second compression spring urging the valve body to move toward the valve seat,
a seal ring interposed between the valve body urged by the second compression spring and the valve seat,
a valve stem extended from the valve body toward the liquid-receiving port of the inlet member and disposed inside flow channel which is communicated with the liquid-receiving port, and
a lower member supporting the second compression spring and defining the valve chamber space surrounding the valve body.

2. The liquid injector according to claim 1, wherein the first and the second compression springs are both formed of a metallic material which is excellent in corrosion resistance.

3. The liquid injector according to claim 1, wherein the first and the second compression springs are both formed of a surface-treated metallic material.

4. The liquid injector according to claim 3, wherein the surface-treatment is derived from plating of noble metals or from resin coating.

5. The liquid injector according to claim 1, wherein the first and the second compression springs are both formed of a non-metallic material.

6. The liquid injector according to claim 1, wherein a spring modulus ε1 of the first compression spring is made equivalent to or larger than a spring modulus ε2 of the second compression spring, thereby enabling the valve of the inlet member of fuel cell to open concurrent with or earlier than the opening action of the valve of the cartridge nozzle.

7. The liquid injector according to claim 1, wherein a spring modulus ε2 of the second compression spring may be made larger than a spring modulus ε1 of the first compression spring, thereby enabling the valve of the cartridge nozzle to open earlier than the opening action of the valve of the inlet member of fuel cell.

8. The liquid injector according to claim 1, wherein the first and the second compression springs are both selected from a cylindrical coil spring, a trapezoidal coil spring and a leaf spring.

9. A fuel cell having an inlet member into which a nozzle of fuel cartridge can be inserted,
**characterized in that** the inlet member is constituted by:
a liquid-receiving port for receiving liquid from the nozzle of fuel cartridge,
a valve body disposed in close proximity to the liquid-receiving port,
a valve seat formed to surround flow channel which is communicated with the liquid-receiving port,
a second compression spring urging the valve body to move toward the valve seat,
a seal ring interposed between the valve body urged by the second compression spring and the valve seat,
a valve stem extended from the valve body toward the liquid-receiving port of the inlet member and disposed inside flow channel which is communicated with the liquid-receiving port, and
a lower member supporting the second compression spring and defining the valve chamber space surrounding the valve body.

10. A fuel cartridge having a nozzle which is designed to be inserted into an inlet member of a fuel cell for replenishing the fuel cell with liquid fuel,
**characterized in that** the nozzle is constituted by:
a liquid inflow port which is communicated with a container of the fuel cartridge,
a liquid delivery port which is communicated with the liquid inflow port and opens to a distal end of the nozzle,
a valve body which is disposed in close proximity to the liquid inflow port,
a valve seat formed to surround flow channel which is communicated with the liquid inflow port,
a first compression spring urging the valve body to move toward the valve seat,
a seal ring interposed between the valve body urged by the first compression spring and the valve seat,
a valve stem extended from the valve body toward the nozzle and disposed inside flow channel which is communicated with the liquid delivery port, and
an inside plug supporting the first compression spring and defining a valve chamber space surrounding the valve body.
